# FASCICULE DE BREVET EUROPEEN

(11) **EP 3 623 486 B1**
(45) Date de publication et mention de la délivrance du brevet: **08.03.2023**
(21) Numéro de dépôt: 19197321.3
(22) Date de dépôt: 13.09.2019
(51) Int. Cl.: C21D 7/02, C21D 9/28, C23C 8/22, C23C 8/32, C23C 8/80, C21D 1/06, C21D 1/18, C21D 1/30, C21D 1/42, F16C 3/02

(54) **PROCÉDÉ DE REDRESSAGE D'UN ARBRE MÉTALLIQUE COMPORTANT UNE ÉTAPE DE REVENU LOCALISÉ**
AUSRICHTUNGSVERFAHREN EINER METALLWELLE, DAS EINE LOKALISIERTE ANLASSPHASE UMFASST
METHOD FOR STRAIGHTENING A METAL SHAFT COMPRISING A LOCALISED RETURN STEP

(30) Priorité: 14.09.2018 FR 1858315
(43) Date de publication de la demande: 18.03.2020
(73) Titulaire: Renault s.a.s, 92100 Boulogne Billancourt (FR)
(72) Inventeur: Serpin, Kevin, 27370 37 rue Delamarre (FR); Perseval, Romain, 27290 Thierville (FR); Modard, Baptiste, 76500 Elbeuf (FR); Bonhomme, Vianney, 76000 Rouen (FR)
(74) Mandataire: Renault Group

(56) Documents cités:
- CN-A- 108 148 991
- US-A- 3 024 626
- US-A- 5 104 462
- US-A1- 2008 244 892
- US-A1- 2017 314 117

## Description

### DOMAINE TECHNIQUE DE L'INVENTION

L'invention concerne un procédé de traitement d'un arbre métallique de boîte de vitesses, notamment pour un véhicule automobile, qui comporte chronologiquement :
- une étape de traitement thermique durant laquelle l'arbre est exposé à une température élevée suivie d'une opération de trempe qui provoque une déformation en flexion de l'arbre, l'arbre présentant ainsi une flèche permanente ;
- une étape de redressage qui consiste à imposer une déformation plastique en flexion opposée à la flèche pour que l'axe de l'arbre soit globalement rectiligne.

### ARRIERE PLAN TECHNIQUE DE L'INVENTION

Les arbres d'une boîte de vitesses de véhicule automobile sont très sollicités, notamment en frottement et en fatigue. Pour les rendre plus résistants, ils sont soumis, au cours de leur production, à un traitement thermique pour durcir leur surface. Ce traitement thermique est généralement réalisé sur l'arbre lorsque présente globalement sa forme finale.

Il s'agit par exemple d'un traitement thermique par carbonitruration ou par cémentation. Lors d'un tel traitement thermique, l'arbre est soumis à une température très élevée, par exemple aux alentours de 900°C, dans une atmosphère riche en carbone, en propane, en azote. Puis, l'arbre ainsi chauffé est refroidi brutalement par une opération de trempe.

Un tel traitement thermique permet d'obtenir un arbre dont le matériau métallique présente une couche superficielle dure et un coeur tendre et ductile.

Cependant, on a constaté que les amplitudes thermiques auxquelles l'arbre était soumis avaient tendance à créer des contraintes mécaniques internes résiduelles. Ces dernières provoquent des déformations significatives de l'arbre, notamment en flexion. L'arbre ainsi traité présente une flèche qui, bien souvent, ne respecte pas les tolérances de fabrication.

Il est donc préconisé de réaliser une étape de redressage de l'arbre suite à cette étape de traitement thermique. Le redressage est réalisé par une flexion de l'arbre, dans un sens opposé à la flèche, dans le domaine plastique afin de redonner à l'arbre un axe principale globalement rectiligne de façon permanente. Un tel procédé est divulgué dans US2008/244892, voir une trempe superficielle comportant une étape, postérieure à l'étape de traitement thermique de surface, de redressage mécanique d'au moins une partie axiale de l'arbre. En outre, le document US 3024626 divulgue un procédé appliqué à un arbre de transmission comportant un traitement de réduction des contraintes résiduelles qui est effectué avant l'étape de durcissement.

Cependant, on a observé que pour certaines géométries d'arbre, cette opération de redressage créait, sur certains tronçons, des concentrations de contraintes mécaniques supérieures à la résistance à la rupture du matériau constituant l'arbre. Il en résulte la formation de fissures, voire une rupture totale de l'arbre au niveau de ces tronçons favorisant les concentrations de contraintes.

Le taux d'arbres mis au rebut pour cette cause peut être assez élevé, ce qui a des conséquences financières importantes pour le fabricant.

### BREF RESUME DE L'INVENTION

L'invention propose un procédé de traitement d'un arbre métallique de boîte de vitesses, notamment pour un véhicule automobile, qui comporte chronologiquement :
- une étape de traitement thermique durant laquelle l'arbre est exposé à une température élevée suivie d'une opération de trempe qui provoque une déformation en flexion de l'arbre, l'arbre présentant ainsi une flèche permanente ;
- une étape de redressage qui consiste à imposer une déformation plastique en flexion opposée à la flèche pour que l'axe de l'arbre soit globalement rectiligne ;
   caractérisé en ce qu'il comporte une étape de revenu qui est réalisée après l'étape de traitement thermique et avant la fin de l'étape de redressage et durant laquelle au moins un tronçon sélectionné de l'arbre est soumis à un traitement localisé de revenu ainsi que
- le tronçon sélectionné présente une géométrie qui favorise les concentrations de contrainte mécanique par rapport au reste de l'arbre ;

Selon d'autres caractéristiques de l'invention:
- le tronçon sélectionné présente une géométrie qui présente la plus grande concentration de contraintes mécaniques par rapport au reste de l'arbre ;
- le tronçon sélectionné est déterminé par calcul numérique du champ de contraintes, par exemple par application de la méthode des éléments finis ;
- lors du traitement de revenu de l'étape de revenu, le tronçon d'arbre sélectionné est soumis à une température de revenu inférieure à 250°C ; une telle température a pour avantage de relâcher les tensions sans modifier profondément la structure métallurgique du tronçon sélectionné ;
- lors de la première étape de traitement, le traitement thermique de l'arbre est un traitement par carbonitruration ou par cémentation ;
- lors de l'étape de revenu, le traitement de revenu est réalisé par induction électromagnétique ;
- l'étape de revenu est finalisée avant le début de l'étape de redressage ;
- l'étape de revenu est réalisée au moins en partie pendant l'étape de redressage.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de profil qui représente un arbre de boîte de vitesses avant traitement thermique ;
- la figure 2 est un schéma-bloc qui représente un procédé de fabrication d'un arbre de boîte de vitesses traité selon un premier mode de réalisation de l'invention ;
- la figure 3 est une vue similaire à celle de la figure 1 qui représente l'arbre de boîte de vitesses déformé après une étape de traitement thermique et avant redressage ;
- la figure 4 est un schéma-bloc qui représente un procédé de fabrication d'un arbre de boîte de vitesses traité selon un deuxième mode de réalisation de l'invention ;
- la figure 5 est un schéma qui représente une chaîne de fabrication équipée d'un inducteur électromagnétique adapté pour réaliser le procédé selon le premier mode de réalisation de l'invention.

### DESCRIPTION DETAILLEE DES FIGURES

Dans la suite de la description, des éléments présentant des fonctions analogues ou des structures identiques seront désignés par une même référence.

Dans la suite de la description, on adoptera à titre non limitatif une orientation longitudinale 'L" dirigée selon l'axe longitudinal de l'arbre et des orientations radiales s'étendant perpendiculairement à l'arbre dans toutes les directions.

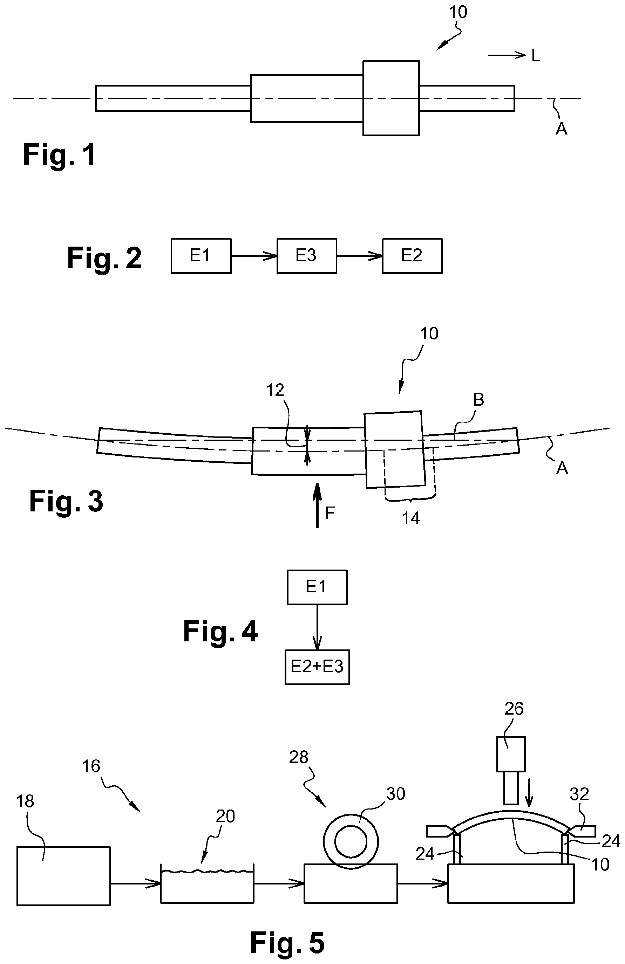

On a représenté schématiquement à la figure 1 un arbre 10 de boîte de vitesses d'axe "A" longitudinal. Cet arbre 10 est destiné à recevoir divers éléments tels que des pignons fixes et/ou mobiles. L'arbre 10 est réalisé en un matériau métallique tel que de l'acier.

L'arbre 10 représenté à la figure 1 présente un axe "A" principal rectiligne orienté longitudinalement. Cet arbre 10 est destiné à subir un procédé de traitement, notamment pour en durcir la surface.

Comme cela est représenté à la figure 2, un tel procédé de traitement comporte chronologiquement une première étape "E1" de traitement thermique durant laquelle l'arbre 10 est exposé à une température "Tt" de traitement élevée suivie d'une opération de trempe. Il s'agit par exemple d'un traitement par carbonitruration ou d'un traitement par cémentation.

Durant un tel traitement, la température "Tt" de traitement est très élevée, par exemple d'environ 900°C. Pour finir le traitement, l'arbre 10 subit directement une opération de trempe qui fait baisser brutalement sa température, par exemple à une température d'environ 140°C.

On a représenté à la figure 5 un exemple de chaîne 16 de fabrication d'un tel arbre 10. La chaîne 16 comporte ainsi un four 18 qui permet de chauffer l'arbre 10 à la température "Tt" de traitement dans une atmosphère adaptée, par exemple riche en carbone et en azote. Puis la chaîne 16 présente une cuve 20 de trempe agencée en aval du four 18 selon le flux des arbres 10 dans la chaîne 16 de fabrication. La cuve 20 est par exemple remplie d'un fluide, tel que de l'huile, qui permet de réaliser l'opération de trempe.

Lors de la première étape "E1" de traitement, la variation importante de températures en un laps de temps aussi court provoque une déformation en flexion de l'arbre 10 de boîte de vitesses. Comme cela est représenté à la figure 3, l'arbre 10 présentant ainsi une flèche 12 permanente qui est ici déterminée comme étant la distance radiale maximale entre l'axe "A" de l'arbre et une droite "B" longitudinale imaginaire joignant les deux extrémités de l'arbre 10.

Lorsque la flèche 12 présente une dimension supérieure à un seuil de tolérance, l'arbre 10 ainsi déformé est rectifié en subissant une étape "E2" de redressage. Cette étape "E2" de redressage est réalisée après l'étape "E1" de traitement. Elle consiste à imposer une déformation plastique en flexion opposée à la flèche pour que l'axe "A" de l'arbre 10 soit globalement rectiligne. A cet effet, un effort de flexion symbolisé par la flèche "F" de la figure 3 est imposé à l'arbre 10.

Par exemple, comme cela est représenté à la figure 5, l'arbre 10 est installé dans une station 22 de redressage qui comporte des enclumes 24 qui supportent chacune une extrémité de l'arbre 10. L'arbre 10 est serré longitudinalement entre deux pointes 32 tournantes qui sont susceptibles d'entraîner l'arbre 10 en rotation autour de son axe "A" de manière à repérer la direction de la flèche 12. L'arbre 10 est ensuite calé dans une position angulaire dans laquelle la flèche 12 est dirigée vers un moyen de poussée, tel qu'un vérin 26. Puis un effort radial est appliqué sensiblement au centre longitudinal de l'arbre 10, par exemple par le vérin 26, pour lui imposer une flexion dans un sens opposé à la flèche 12.

On a constaté que pour certaines géométries d'arbres 10, cette étape "E2" de redressage pouvait aboutir à la création de fissures, voire à la rupture, de certains tronçons de l'arbre 10.

De telles fissures ou ruptures sont plus particulièrement susceptibles de se produire dans les tronçons présentant une géométrie qui favorise les concentrations de contrainte mécanique par rapport au reste de l'arbre. Il s'agit notamment des tronçons d'arbre 10 présentant une section transversale qui varie de manière brutale tel qu'un tronçon muni d'un épaulement et/ou d'une gorge et/ou d'un trou et/ou d'une rainure et/ou de cannelure, etc.

L'invention propose de faire subir à l'arbre 10 une étape "E3" de revenu qui est réalisée après l'étape "E1" de traitement thermique et avant la fin de l'étape "E2" de redressage. Durant cette étape "E3" de revenu, au moins un tronçon sélectionné de l'arbre 10 est soumis à un traitement localisé de revenu.

Lors du traitement de revenu de l'étape "E3" de revenu, le tronçon d'arbre sélectionné est soumis localement à une température "Tr" de revenu. Le terme "localisé" signifie que seul le tronçon sélectionné est soumis au traitement de revenu, les tronçons adjacents de l'arbre n'étant pas directement soumis au traitement de revenu. Cela signifie que les tronçons adjacents peuvent être chauffés uniquement par conduction thermique avec le tronçon sélectionné.

La température "Tr" de revenu est assez élevée pour provoquer un relâchement des contraintes mécaniques, une augmentation de la ductilité du matériau constituant le tronçon et une diminution du module élastique. La température "Tr" de revenu est toutefois suffisamment basse pour éviter d'altérer de manière conséquente les propriétés métallurgiques du matériau obtenues par le traitement thermique. La température "Tr" de revenu est par exemple inférieure à 250°C.

Le tronçon sélectionné pour subir l'étape de revenu présente une géométrie qui favorise les concentrations de contrainte mécanique par rapport au reste de l'arbre 10. Dans l'exemple représenté à la figure 3, il s'agit du tronçon 14 qui présente un épaulement suivi d'un tronçon long et fin de l'arbre 10.

Dans un mode de réalisation de l'invention, un seul tronçon 14 est amené à subir l'étape "E3 de revenu. Il s'agit du tronçon 14 présentant la géométrie qui présente la plus grande concentration de contrainte mécanique par rapport au reste de l'arbre 10.

Ce tronçon 14 sélectionné peut être déterminé de manière triviale, par exemple visuellement, lorsque la forme de l'arbre 10 est suffisamment simple.

Lorsque l'arbre 10 présente une forme complexe, le tronçon 14 sélectionné est déterminé par calcul numérique de la concentration de contraintes, par exemple par application de la méthode des éléments finis.

Selon une variante non représentée de l'invention, plusieurs tronçons non jointifs de l'arbre 10 sont soumis au traitement de revenu lors de l'étape "E3" de revenu.

Afin de pouvoir chauffer de manière localisée le tronçon 14 sélectionné de l'arbre 10, le traitement de revenu est réalisé par induction électromagnétique. A cet effet, la chaîne 16 de fabrication de l'arbre 10 comporte une station 28 de traitement de revenu par induction équipée d'un inducteur 30 électromagnétique présentant la forme d'un "U" ou d'un "O".

La dimension longitudinale minimale du tronçon 14 sélectionné est identique à la largeur de l'inducteur 30.

L'étape "E3" de revenu est réalisée avant le début de l'étape "E2" de redressage. A cet effet, la station 28 de traitement de revenu est indépendante de la station 22 de redressage. Elle est agencée en amont de la station 22 de redressage, comme cela est représenté à la figure 5.

En variante non représentée de l'invention, l'inducteur fait partie de la station de redressage. Dans ce dernier cas, il est aussi possible de réaliser l'étape "E3" de revenu au moins en partie pendant l'étape "E2" de redressage, comme cela est illustré à la figure 4. Par exemple, l'étape "E3" de revenu commence juste avant l'étape "E2" de redressage et elle peut se poursuivre après le début de l'étape "E2" de redressage.

En tous les cas, l'étape "E2" de redressage est réalisée pendant que le tronçon 14 sélectionné est encore assez chaud pour présenter une ductilité suffisante pour ne pas rompre ou se fissurer pendant l'étape "E2" de redressage.

## Revendications

1. Procédé de traitement pour durcir la surface d'un arbre (10) métallique de boîte de vitesses, notamment pour un véhicule automobile, qui comporte chronologiquement :
- une étape (E1) de traitement thermique durant laquelle l'arbre (10) est exposé à une température (Tt) élevée suivie d'une opération de trempe qui provoque une déformation en flexion de l'arbre (10), l'arbre (10) présentant ainsi une flèche (12) permanente ;
- une étape (E2) de redressage qui consiste à imposer une déformation plastique en flexion opposée à la flèche (12) pour que l'axe (A) de l'arbre (10) soit globalement rectiligne ;
**caractérisé en ce qu'**on sélectionne au moins un tronçon (14) de l'arbre (10) présentant une géométrie qui favorise les concentrations de contrainte mécanique par rapport au reste de l'arbre 10, et **en ce qu'**on soumet le tronçon sélectionné à un traitement localisé de revenu, dans une étape de revenu (E3) qui est réalisée après l'étape (E1) de traitement thermique et avant la fin de l'étape (E2) de redressage de l'arbre.

2. Procédé selon la revendication précédente, **caractérisé en ce que** le tronçon (14) sélectionné présente une géométrie qui présente la plus grande concentration de contraintes mécaniques par rapport au reste de l'arbre (10).

3. Procédé selon l'une quelconque des revendications 1 ou 2, **caractérisé en ce que** le tronçon (14) sélectionné est déterminé par calcul numérique du champ de contraintes, par exemple par application de la méthode des éléments finis.

4. Procédé selon l'une quelconque des revendications précédentes, **caractérisé en ce que** lors du traitement de revenu de l'étape (E3) de revenu, le tronçon (14) d'arbre sélectionné est soumis à une température (Tr) de revenu inférieure à 250°C.

5. Procédé selon l'une quelconque des revendications précédentes, **caractérisé en ce que** lors de la première étape (E1) de traitement, le traitement thermique de l'arbre (10) est un traitement par carbonitruration ou par cémentation.

6. Procédé selon l'une quelconque des revendications précédentes, **caractérisé en ce que** lors de l'étape (E3) de revenu, le traitement de revenu est réalisé par induction électromagnétique.

7. Procédé selon l'une quelconque des revendications précédentes, **caractérisé en ce que** l'étape (E3) de revenu est finalisée avant le début de l'étape (E2) de redressage.

8. Procédé selon l'une quelconque des revendications 1 à 7, **caractérisé en ce que** l'étape (E3) de revenu est réalisée au moins en partie pendant l'étape (E2) de redressage.

## Patentansprüche

1. Behandlungsverfahren zum Härten der Oberfläche einer Metallwelle (10) eines Getriebes, insbesondere für ein Kraftfahrzeug, das in chronologischer Reihenfolge Folgendes umfasst:
- eine Wärmebehandlungsphase (E1), während der die Welle (10) einer hohen Temperatur (Tt) ausgesetzt wird, gefolgt von einem Abschreckvorgang, der eine Biegeverformung der Welle (10) bewirkt, sodass die Welle (10) eine dauerhafte Durchbiegung (12) aufweist;
- eine Richtphase (E2), die darin besteht, eine plastische Biegeverformung, die der Durchbiegung (12) entgegengesetzt ist, herbeizuführen, damit die Achse (A) der Welle (10) insgesamt geradlinig ist;
**dadurch gekennzeichnet, dass** mindestens ein Abschnitt (14) der Welle (10), der eine Geometrie aufweist, die verglichen mit dem Rest der Welle 10 mechanische Spannungskonzentrationen begünstigt, ausgewählt wird und dass der ausgewählte Abschnitt während einer Anlassphase (E3), die nach der Wärmebehandlungsphase (E1) und vor dem Ende der Richtphase (E2) der Welle durchgeführt wird, einer lokalisierten Anlassbehandlung unterzogen wird.

2. Verfahren nach dem vorhergehenden Anspruch, **dadurch gekennzeichnet, dass** der ausgewählte Abschnitt (14) eine Geometrie aufweist, die verglichen mit dem Rest der Welle (10) die größte mechanische Spannungskonzentration aufweist.

3. Verfahren nach einem beliebigen der Ansprüche 1 oder 2, **dadurch gekennzeichnet, dass** der ausgewählte Abschnitt (14) durch numerische Berechnung des Spannungsfeldes, beispielsweise durch Anwendung der Finite-Elemente-Methode, bestimmt wird.

4. Verfahren nach einem beliebigen der vorhergehenden Ansprüche, **dadurch gekennzeichnet, dass** der ausgewählte Wellenabschnitt (14) während der Anlassbehandlung der Anlassphase (E3) einer Anlasstemperatur (Tr) ausgesetzt wird, die weniger als 250 °C beträgt.

5. Verfahren nach einem beliebigen der vorhergehenden Ansprüche, **dadurch gekennzeichnet, dass** die Wärmebehandlung der Welle (10) während der ersten Behandlungsphase (E1) eine Behandlung durch Carbonitrieren oder durch Einsatzhärten ist.

6. Verfahren nach einem beliebigen der vorhergehenden Ansprüche, **dadurch gekennzeichnet, dass** die Anlassbehandlung während der Anlassphase (E3) durch elektromagnetische Induktion durchgeführt wird.

7. Verfahren nach einem beliebigen der vorhergehenden Ansprüche, **dadurch gekennzeichnet, dass** die Anlassphase (E3) vor dem Beginn der Richtphase (E2) abgeschlossen wird.

8. Verfahren nach einem beliebigen der Ansprüche 1 bis 7, **dadurch gekennzeichnet, dass** die Anlassphase (E3) mindestens teilweise während der Richtphase (E2) durchgeführt wird.

## Claims

1. Treatment method for hardening the surface of a metallic shaft (10) of a gearbox, notably for a motor vehicle, which chronologically comprises:
- a thermal treatment step (E1) during which the shaft (10) is exposed to a high temperature (Tt) followed by a quenching operation which causes a bending deformation of the shaft (10), the shaft (10) thus exhibiting a permanent distortion (12);
- a straightening step (E2) which consists in imposing a plastic bending deformation in the direction opposite to the distortion (12) such that the axis (A) of the shaft (10) is rectilinear overall;
**characterized in that** at least one portion (14) of the shaft (10), said portion exhibiting a geometry which promotes mechanical stress concentrations with respect to the rest of the shaft (10), is selected, and **in that** the selected portion is subjected to a localized tempering treatment, in a tempering step (E3) which is carried out after the thermal treatment step (E1) and before the end of the straightening step (E2) for straightening the shaft.

2. Method according to the preceding claim, **characterized in that** the selected portion (14) exhibits a geometry which has the greatest mechanical stress concentration with respect to the rest of the shaft (10).

3. Method according to either one of Claims 1 and 2, **characterized in that** the selected portion (14) is determined by numerical calculation of the stress field, for example by application of the finite element method.

4. Method according to any one of the preceding claims, **characterized in that**, during the tempering treatment of the tempering step (E3), the selected shaft portion (14) is subjected to a tempering temperature (Tr) of less than 250°C.

5. Method according to any one of the preceding claims, **characterized in that**, during the first treatment step (E1), the thermal treatment of the shaft (10) is a treatment by carbonitriding or by carburization.

6. Method according to any one of the preceding claims, **characterized in that**, during the tempering step (E3), the tempering treatment is carried out by electromagnetic induction.

7. Method according to any one of the preceding claims, **characterized in that** the tempering step (E3) is completed before the start of the straightening step (E2) .

8. Method according to any one of Claims 1 to 7, **characterized in that** the tempering step (E3) is at least partially carried out during the straightening step (E2).
